Europäisches Patentamt

European Patent Office

Office européen des brevets

(11) Publication number: **0 242 195**
A1

## (12) EUROPEAN PATENT APPLICATION

(21) Application number: **87303302.1**

(22) Date of filing: **15.04.87**

(51) Int. Cl.⁴: **B 65 G 65/06**
**B 65 G 67/60**

(30) Priority: **18.04.86 GB 8609500**

(43) Date of publication of application:
**21.10.87 Bulletin 87/43**

(84) Designated Contracting States: **DE FR IT NL SE**

(71) Applicant: **GEC MECHANICAL HANDLING LIMITED**
**Spencer Works Beanacre Road**
**Melksham Wiltshire SN12 8AX (GB)**

(72) Inventor: **Addicott, Donald William Russell**
**High Danson The Ridge**
**Cold Ash Newbury Berkshire (GB)**

(74) Representative: **Kirby, Harold Victor Albert**
**The General Electric Company, p.l.c. Central Patent**
**Department Wembley Office GEC Research Centre East**
**Lane**
**Wembley Middlesex HA9 7PP (GB)**

(54) **Material handling systems.**

(57) A material handling system incorporates an elevator leg (E) supported in bearings (C, F) which permit a degree of transverse pivoting movement includes means for inhibiting further movement or operating a warning device in the event that the transverse load on the leg attains a predetermined value.

Fig.2.

## Description

Material Handling Systems

This invention relates to material handling systems of the kind designed for unloading a wide range of bulk material from ships, barges, storage containers, stockyards and the like, and which incorporates an elevator leg depending from a supporting structure and capable in use of raising the material and depositing it on a moving belt or other means to be subsequently discharged either on to a suitable conveyor or into mobile containers such as lorries or railway wagons.

In such systems the elevator leg is usually pivotable to a limited extent outwardly or inwardly from the vertical in order to enable the elevator leg to reach different parts of a hold, container, stockyard or the like, such movement being commonly referred to as "kicking".

However, in use, the lower end of the elevator leg may be subjected to a high horizontal transverse load due to the device feeding material into the elevator or its method of operation. Such a load, if of sufficient magnitude, could cause the elevator leg structure to fail in bending and/or the supporting structure to fail in torsion. An object of the invention accordingly is to provide a means of protecting such structures against excessive horizontal transverse loading of the elevator leg.

According, therefore, to the invention, in a material handling system of the kind referred to, in which the elevator leg is pivotable to a limited extend outwardly or inwardly relative to the supporting structure, the leg is supported by bearings which permit a degree of transverse angular movement of the leg, and means are provided for monitoring such movement, and for initiating the operation of a warning device and/or inhibiting further movement of the leg, in the event that the transverse load on the elevator leg attains a predetermined value.

Conveniently the leg is pivotable in the outward and inward directions about a main pin carried by the main supporting structure and is itself supported by a pair of spherical bearings adjacent each end of the pin, the bearings being accommodated in sliding bearing housings which permit limited transverse angular movement of the leg. Preferably a hydraulic ram is located beneath each bearing housing and is such that movement of a bearing block by more than a predetermined amount depresses the ram and increases the pressure in a hydraulic circuit, the circuit incorporating a pressure sensor which provides a signal to actuate said warning device which may provide an audible and/or visible warning signal in the event that the pressure attains a normal operating limit. This enables the operator of the system to take the necessary corrective action.

In the event that the operator fails to take action on receipt of the warning signal further increase in pressure to a predetermined limiting value will actuate means for preventing further movement of the leg.

The hydraulic circuit conveniently incorporates a pressure relief valve operative to release the pressure in the respective part of the hydraulic system if said normal operating pressure limit is exceeded, so as to allow the ram to retract, the latter being associated with a position transducer which is operative to generate a signal which arrests any further movement of the leg on retraction of the ram. The operator can then reverse the appropriate motion or motions of the leg to eliminate the horizontal loading producing the transverse angular movement of the leg, and thereby cause the leg to swing into a vertical position.

The signal generated by the position transducer is preferably also operative to cause energisation of a hydraulic pump which then returns the respective ram to its extended position, the pump being de-energised when both rams are in their fully extended positions.

One material handling system in accordance with the invention will now be described by way of example with reference to Figures 1 to 4 of the accompanying schematic drawings, in which

Figure 1 represents a front view in diagrammatic form of part of the system, showing the elevator leg and part of a supporting structure therefor,

Figure 2 illustrates a transverse sectional elevation of the upper part of the elevator leg and associated part of the supporting structure, together with a diagrammatic representation of a suitable hydraulic system for monitoring transverse loading on the leg,

Figure 3 represents a section along the line X-X of the part of the assembly illustrated in Figure 2, and

Figure 4 represents a view of the assembly, similar to that of Figure 2 in which the elevator leg has been subjected to a transverse load.

Referring to the drawings H represents an end view of a luffing boom which provides a supporting structure for an elevator leg E, which may, for example, accommodate a bucket elevator (not shown). The two arms of the luffing boom H carry between them, in main spherical bearings F, a hinge pin A which supports the elevator leg E. The latter is supported from the hinge pin A by means of further spherical bearings C which are accommodated in sliding bearing housings B located in vertically extending guide slots T in the leg.

Beneath each bearing housing B there is located a respective load sensing hydraulic ram D associated with a ram position transducer J of any convenient kind.

A hydraulic pump M is coupled separately to each hydraulic ram D via a respective low pressure relief valve S a non-return valve V, a pressure relief/unloading valve L and pressure sensor K.

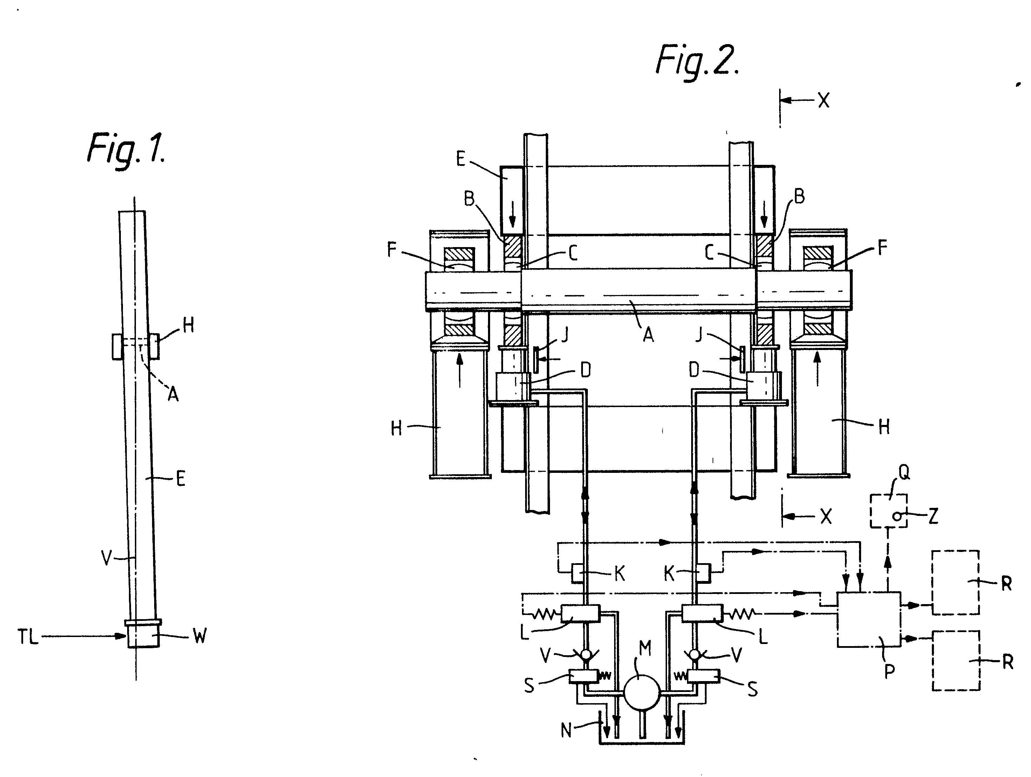

In use, the system is initially set up with the elevator leg E in a vertical position as in Figure 2 by running the pump M until the load sensing rams D are fully extended with a small clearance between tops of rams and underside of sliding bearing housings B. When the rams are fully extended the position transducers J automatically stop the pump M with hydraulic fluid trapped in the system above the non-return valves V with the pressure relief valves L closed. The pump M runs automatically whenever rams are displaced from the fully extended position.

Under conditions of no horizontal load on the boot W at the lower end of the elevator leg E (Fig 1) the weight of the leg E is shared by each of the main spherical bearings F, with no load transmitted to the rams D.

When a transverse horizontal load is applied to boot of elevator, in the direction of the arrow TL in Figure 1, the leg is caused to swing to the right away from the vertical, represented by the line V, until the ram D on the right hand side touches underside of sliding bearing housing B. As the horizontal load on the boot W increases, pressure on this ram D builds up and is measured by the pressure sensor K which provides a signal through a control device P in the form of analogue system to the operator at Q. As the horizontal load and ram pressure continue to increase and reach normal operating limit, the pressure sensor K via the control device P operates a high level alarm Z in the operators cab so the necessary corrective action can be taken.

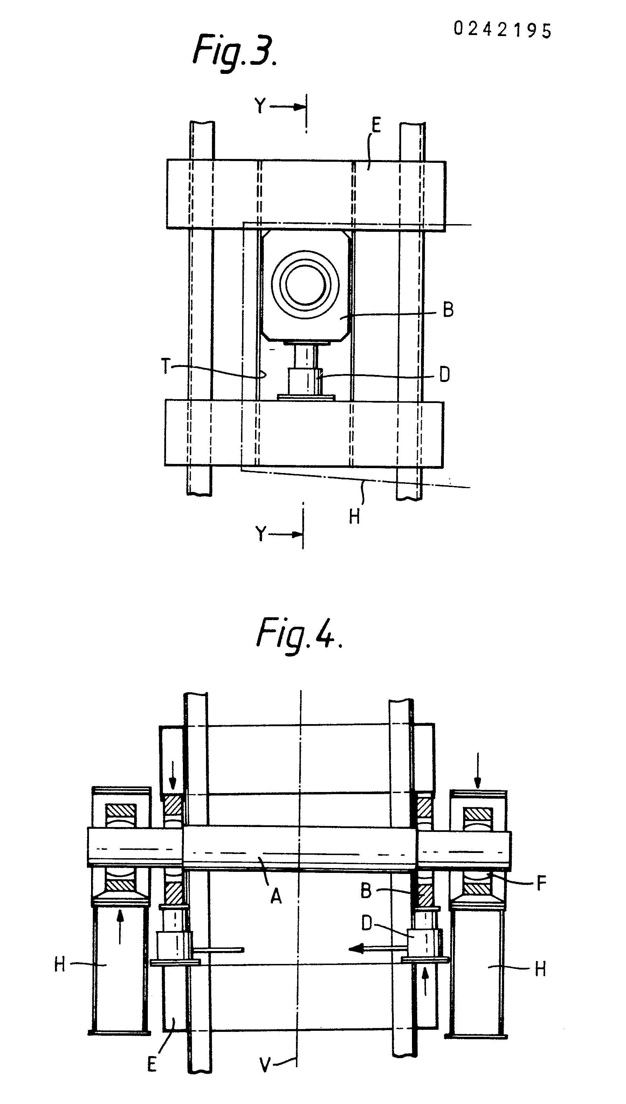

If corrective action is not taken by operator and the horizontal load on elevator boot W reaches the predetermined limit, the respective pressure relief valve L opens and hydraulic fluid from right hand ram flows back to a reservoir tank N. The ram retracts and allows the elevator leg to swing further to the right as in Figure 4.

At the instant the ram retracts the movement is registered by the associated position transducer J (with indication to the operator) which transmits a signal to the control device P which in turn, via the motor control centres, stops all appropriate motions that were operating (including long travel, slew, luff and kick in/out) to eliminate damage to the elevator leg structure and/or luffing boom.

At this stage the operator reverses the appropriate motion or motions to eliminate the horizontal load on the boot W and to allow the elevator leg E to swing back to the vertical position.

Also at the instant the ram retracts the pump M restarts and hydraulic fluid circulates to the tank N via the respective low pressure relief valve S until the ram D is clear of the underside of sliding bearing housing B.

When corrective action is taken the pressure relief valve L closes, and the pressure above the non-return valve V is then less than the setting of the low pressure relief valve S. Then as for the initial set up, the pump M continues to run until the right hand ram D is again fully extended, at which point the position transducer J stops the pump and indicates to the operator the recovery status of the system, including the position of the elevator leg E. The same sequence operates, but with the left hand elements functioning, when a horizontal transverse load is applied to right hand side of elevator boot.

## Claims

1. A material handling system of the kind referred to in which the elevator leg is pivotable to a limited extent outwardly or inwardly from the supporting structure, wherein the leg is supported by bearings which permit a degree of transverse angular movement of the leg, and means are provided for monitoring such movement, and for initiating the operation of a warning device and/or inhibiting further movement of the leg, in the event that the transverse load on the elevator leg attains a predetermined value.

2. A material handling system according to Claim 1 wherein the leg is pivotable in the outward and inward directions about a main pin carried by the main supporting structure and is itself supported by a pair of spherical bearings adjacent each end of the pin, the bearings being accommodated in sliding bearing housings which permit limited transverse angular movement of the leg.

3. A material handling system according to Claim 1 or 2 wherein a hydraulic ram is located beneath each bearing housing and is such that movement of a bearing block by more than a predetermined amount depresses the ram and increases the pressure in a hydraulic circuit, the circuit incorporating a pressure sensor which provides a signal to actuate said warning device in the event that the pressure attains a normal operating limit.

4. A material handling system according to Claim 1, 2 or 3 wherein the warning device is arranged to provide an audible and/or a visible warning signal.

5. A material handling system according to Claim 3 wherein the hydraulic circuit incorporates a pressure relief valve operative to release the pressure in the respective part of the hydraulic system if said normal operating limit pressure is exceeded, so as to allow the ram to retract, the latter being associated with a position transducer which is operative to generate a signal which arrests any further movement of the leg on retraction of the ram.

6. A material handling system according to Claim 5 wherein the signal generated by the position transducer is operative to cause energisation of a hydraulic pump which is arranged to return the respective ram to its extended position, the pump being de-energised when both rams are in their fully extended positions.

Fig.2.

Fig.1.

*Fig.3.*

*Fig.4.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | RESEARCH DISCLOSURE, no. 233, September 1983, page 300, Havant Hampshire, GB; "Virtuelle Schwenkachse für Förderanlagen" | 1,4 | B 65 G 65/06<br>B 65 G 67/60 |
| A | IDEM . | 2,3,5 | |
| | --- | | |
| A | DE-U-7 713 496 (BÜHLER-MIAG)<br>* page 2, line 26 - page 3, line 8; figure 2 * | 1 | |
| | --- | | |
| A | FR-A-1 512 544 (SOCIETE FIVES LILLE-CAIL)<br>* page 1, left-hand column, line 30 - right-hand column, line 7; page 2, right-hand column, line 28 - page 3, left-hand column, line 6; figures 1-4 * | 1,2 | |
| | --- | | **TECHNICAL FIELDS SEARCHED (Int. Cl.4)** |
| A | DE-C-1 077 603 (MIAG)<br>* column 3, lines 15-24 * | 6 | B 65 G 17/00<br>B 65 G 43/00<br>B 65 G 65/00<br>B 65 G 67/00 |
| | ----- | | |

The present search report has been drawn up for all claims

| Place of search | Date of completion of the search | Examiner |
|---|---|---|
| BERLIN | 02-07-1987 | SIMON J J P |